# EUROPEAN PATENT SPECIFICATION

(11) **EP 4 562 337 B1**
(45) Date of publication and mention of the grant of the patent: **29.04.2026**
(21) Application number: 23742037.7
(22) Date of filing: 12.07.2023
(51) Int. Cl.: F17C 1/06, B29C 53/60, B29C 53/80

(54) **SPREADER DEVICE FOR MAINTAINING THE SHAPE OF THE PLASTIC LINER IN NON-CIRCULAR CROSS SECTION CYLINDERS DURING WINDING WITH COMPOSITE MATERIAL AND METHOD OF USING SUCH DEVICE**
SPREIZVORRICHTUNG ZUR BEIBEHALTUNG DER FORM DER KUNSTSTOFFAUSKLEIDUNG IN ZYLINDERN MIT NICHTKREISFÖRMIGEM QUERSCHNITT BEIM WICKELN MIT VERBUNDMATERIAL UND VERFAHREN ZUR VERWENDUNG SOLCH EINER VORRICHTUNG
DISPOSITIF D'ÉTALEMENT POUR MAINTENIR LA FORME DU REVÊTEMENT EN PLASTIQUE DANS DES CYLINDRES À SECTION TRANSVERSALE NON CIRCULAIRE PENDANT L'ENROULEMENT AVEC UN MATÉRIAU COMPOSITE ET PROCÉDÉ D'UTILISATION D'UN TEL DISPOSITIF

(30) Priority: 29.07.2022 IT 202200016122
(43) Date of publication of application: 04.06.2025
(73) Proprietor: Carbon Cylinder S.r.l., 30034 Mira (Venezia) (IT)
(72) Inventor: ARTUSI, Giovanni, 30034 Mira (Venezia) (IT)
(74) Representative: Petruzziello, Aldo
(86) International application number: PCT/EP2023/069359
(87) International publication number: WO 2024/022826

(56) References cited:
- CN-A- 114 278 858
- GB-A- 1 402 657
- JP-A- H11 147 262
- US-A1- 2009 071 965

## Description

The present invention relates to a device for maintaining the square, rectangular, polygonal in general and/or in any case non-cylindrical shape of the internal plastic liner of type 4 cylinders, in particular of fluids (liquid or aeriform) at high pressure, during the filament winding phase, or other production technology with composite material of any type (by way of example, but not limited to, fabric, filament, etc). The invention also relates to a method of using such a device.

The field of application of the device of the present invention, which will also be referred to here below as spreader, relates, in the process of manufacturing of type 4 cylinders (cylinders with an inner plastic liner coated with one or more layers of composite material), to the winding phase, i.e. the phase wherein the plastic liner is wrapped by the composite material by means of a filament winding process or other manufacturing technology with composite material of any type (by way of example, and not limited to, fabric, filament, etc.).

The winding of filaments on plastic inner liners of cylindrical cylinders with a circular cross section, traditionally used in the industry, does not create any particular problems due to the rotational symmetry of the cylinder.

JP H11 147262 A discloses a supporting jig for supporting the inner shell (liner) of cylindrical tanks, not polygonal thanks. The inner shell support jig includes a mandrel, an umbrella-shaped skeleton and a skeleton adjusting cylinder that is slidable on the mandrel. The umbrella-shaped skeleton movably supports a plurality of frames at the tip of the umbrella and has one end fixed to the mandrel, through an upper skeleton support. The other end of the umbrella-shaped skeleton is supported by a lower skeleton support, which is fixed to the adjusting cylinder. With such an arrangement the upper skeleton support remains in a fixed position on the mandrel, while the lower skeleton support slides together with the adjusting cylinder to bring a central connecting portion to abut against the inner shell, preferably near the boundary between a cylindrical portion of the inner shell and a hemispherical shoulder portion. With this solution only a limited area of the inner shell is contacted by the central connecting portion of the umbrella-shaped skeleton, which will not be sufficient to withstand the external forces during filament winding, which forces are not uniformly distributed in case of non-cylindrical tanks.

However, cylinders with a non-circular cross section, more particularly square, rectangular or polygonal cylinders in general, are becoming increasingly widespread, for which it is not easy to maintain the shape of the inner liner during filament and/or composite fabric winding and during the phase of consolidation of the latter.

In fact, the forces in play on the liner during winding, if not appropriately contrasted, can cause deformations of the liner that have repercussions on the final cylinder, which could then have an unacceptable shape, both from the aesthetic and, above all, from the structural point of view.

There is, therefore, the problem of maintaining the shape of the liner of cylinders with non-circular cross section during the winding of the filaments in composite material, and/or of the fabric, during the phase of consolidation of the final structure in composite material.

The object of the invention is precisely to provide a solution to this problem.

More particularly, one object of the invention is to provide a device to be placed inside the liner, provided with means suitable for coming into contact with the inner surface of the same in such a way as to contrast any forces of deformation during winding.

Another object of the invention is to provide such a device which can be adapted to different sizes of cylinders in both height and diameter.

A further object of the invention is to provide such a device which is simple and inexpensive to manufacture.

Yet a further object of the invention is to provide such a device which is simple and intuitive to use.

These objects are achieved by the spreader according to the invention which has the features of the appended independent claim 1.

Advantageous embodiments of the invention are disclosed in the dependent claims.

Essentially, the spreader device according to the invention is specifically designed for manufacturing cylinders having a polygonal cross-section through filament winding technology, wherein a reinforcing fiber of composite material is wound around the outer peripheral surface of a plastic liner having a polygonal cross section, said liner having vertical sides joined by rounded vertices, a bottom wall, and an upper wall provided with an opening, said spreader device comprising a bar axially arranged in said liner, connected to a plurality of members which can be brought into contact with the inner surface of the liner to support it and maintain the shape thereof during the filament winding, wherein said members are vertically extending wings, parallel to the axis of the bar and having a length substantially equal to the length of said vertical sides of the liner, in a number corresponding to said vertices, actuated by articulated connecting rods movable in opposite directions along said bar and rotatable in opposite directions, for bringing said wings from a position of closure adjacent to said bar to a position of opening in contact with said vertices of said liner.

Conveniently, said bar is a threaded bar having a pair of opposing threads at its ends, engaging respective threaded nuts, with corresponding threads, to which said connecting rods are articulated.

The invention also relates to a method of using the spreader device according to the invention, having the features according to claim 7.

Further features of the invention will be made clearer by the following detailed description, referring to an embodiment thereof purely by way of non-limiting example, illustrated in the accompanying drawings, wherein
Figures 1 and 1a are, respectively, a schematic view in midsection and a plan view from above of the liner of a cylinder with square cross section, in which the spreader device according to the invention is inserted, shown in closed position;
Figures 2 and 2a are views similar to Figures 1 and 1a, with the spreader device shown in a partially open position;
Figures 3 and 3a are views similar to Figures 1 and 1a, with the spreader device shown in a fully open position;
Figure 4 is an enlargement of the lower part of Figure 3;

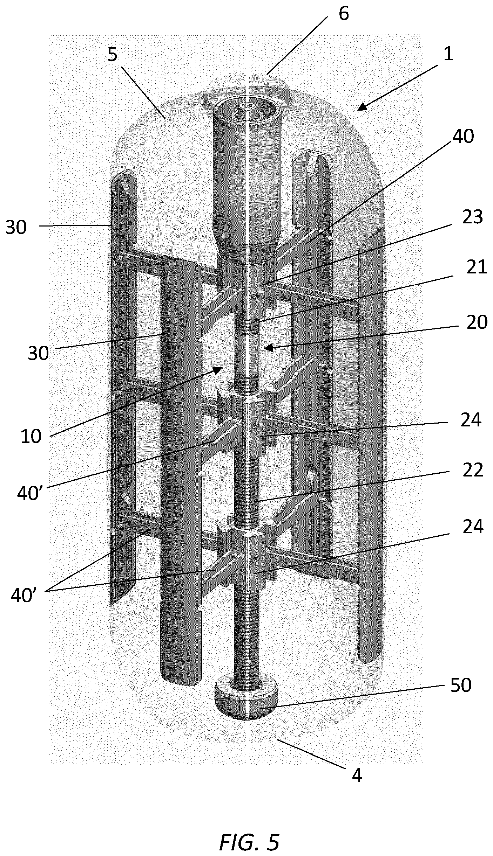

Figure 5 is an axonometric view from above of the liner with the spreader in the fully open position, as in Figure 3, but in a different angular position.

Referring to these drawings, the core or inner liner, onto which one or more layers of filaments in composite material are wound to form a cylinder for the containment of high-pressure fluids, is denoted by 1.

The liner 1, and therefore the cylinder to be formed, has a non-circular cross section, which in the example shown in the drawings is square in shape, but which can obviously be rectangular or polygonal in shape in general, such as to assume a prismatic shape.

The liner 1 has four vertical sides 2 joined by rounded vertices 3, a closed bottom wall 4, and an upper wall 5 provided with a circular opening 6, intended to accommodate the cylinder nozzle.

In a different embodiment, the bottom wall 4 could also have an opening.

In the present description, the terms vertical, upper, lower or bottom refer to the illustrations shown in the drawings.

The spreader device according to the invention is denoted overall by reference numeral 10 and is designed so as to be able to change from a closed resting configuration, of minimal transversal dimensions, smaller than the diameter of the hole 6 of the liner, so as to be able to be inserted therein, to an open configuration of use, as will be referred here below.

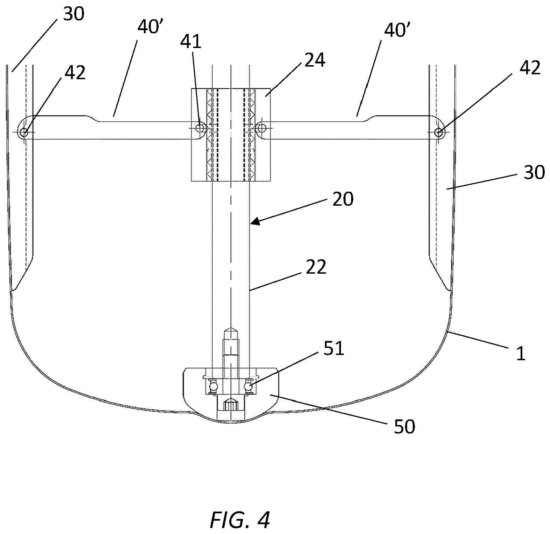

The spreader 10 substantially comprises:
- a threaded bar 20, placed axially in the liner 1, having a pair of opposing threads at its ends, more particularly a right-handed thread 21 at the upper end and a left-handed thread 22 at the lower end or, vice versa, left-handed at the upper end and right-handed at the lower end;
- threaded nuts 23, 24, in the example one 23 having a thread consistent with thread 21 of the threaded bar and two 24 with thread consistent with thread 22 of the threaded bar, capable of engaging with respective threads 21, 22 of the bar 20, in such a way as to translate in opposite directions following rotation of the bar 20;
- four wings 30, with curved cross section and vertical development, parallel to the axis of the bar 20, substantially developing for the height of said vertical sides 2, suitable for being placed internally to the rounded vertices 3 of the liner 1 in order to support it and keep it in shape;
- a plurality of connecting rods 40, 40' that connect the nuts 23, 24 to the wings 30, by means of respective connecting pins 41, 42, in such a way as to rotate in opposite directions following the rotation of the bar 20, following the translation of the respective nuts 23, 24;
- a base 50 with bearing 51 (see in particular Figure 4) with end-stop and antifriction function;
- an upper support 60 for rotating the threaded rod 20 and allowing the opening or closing of the connecting rods 40, 40'.

The functioning of the device according to the invention is quite intuitive.

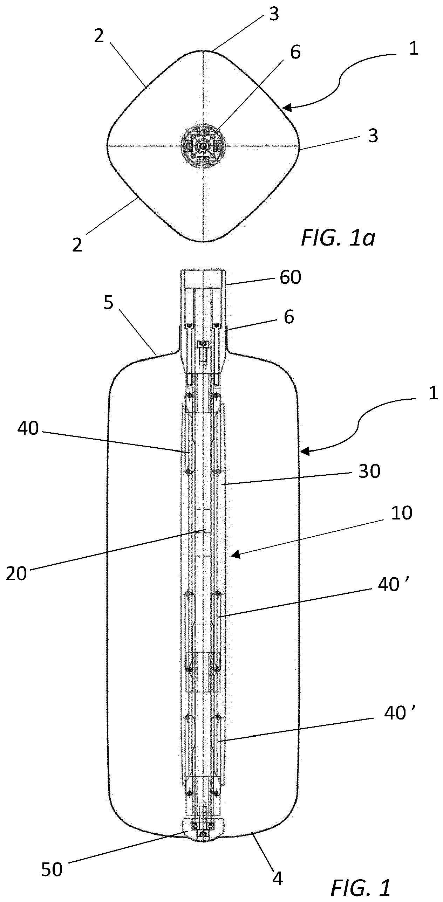

When the liner 1 is ready for winding, the spreader 1 is inserted in its interior in a closed configuration (Figure 1) until it touches the base 2 and is oriented in such a way that the four wings 30 match the vertices or corners 3 of the liner.

Acting with a spanner on the upper support 60, the threaded bar is rotated, which rotation causes the nuts 23 and 24 to translate in opposite directions, due to the different threads at the ends, approaching one to the other.

The translation of the nuts 23, 24 in opposite directions causes the progressive rotation of the corresponding connecting rods 40, 40' coupled to the wings 30, around said connecting pins 41, 42, causing the distancing of the wings 30 from the bar 20 towards the inner surface of the liner.

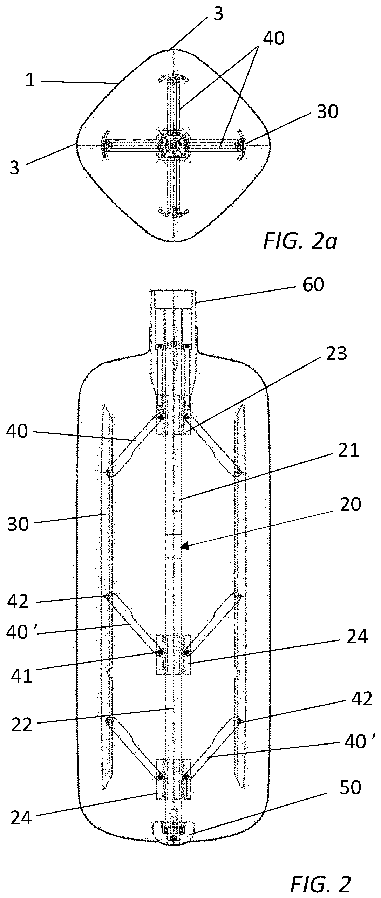

Figure 2 shows an intermediate position of opening of the spreader 10, with the wings 30 still distant from the inner surface of the liner 1.

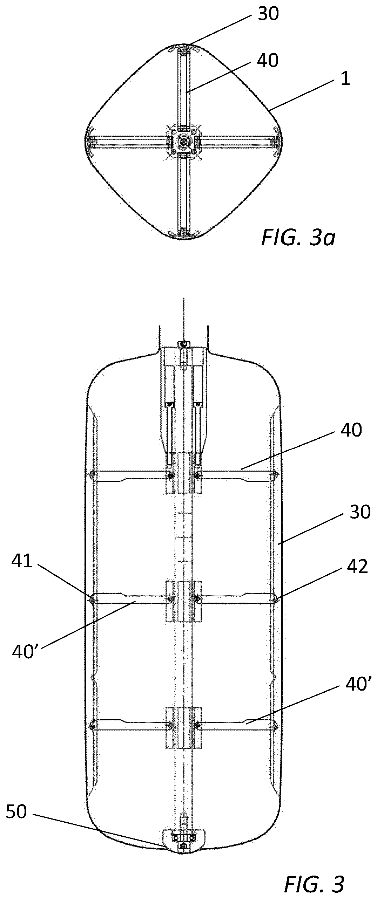

In Figure 3, the wings 30 have come into contact with the inner surface of the liner by pushing with their curved profile against the rounded vertices 3 of the liner, to contrast the inward collapse of the liner itself caused by the force exerted by the filaments and/or fabric being wound.

This will make it possible to maintain the liner 1 in the pre-established (non-cylindrical) shape during the filament winding phase or other production technology with composite material of any type (by way of non-limiting example, fabric, filament, etc.) and to make the composite consolidate in its final structure, giving the cylinder its structural component.

In the position of Figure 3, the connecting rods 40, 40' are in the condition of maximum extension or opening, at right angles with respect to the threaded bar 20.

It is, however, possible to provide threaded bar 20, wings 30 and connecting rods 40, 40' of greater length, and in any case such that they can be adapted to liners of different dimensions.

In practice, the wings 30 could be brought into contact with the inner surface of the liner with the connecting rods 40, 40' forming an acute angle with respect to the threaded bar 20, for example as shown in Figure 2, without necessarily being placed at right angles with respect thereto.

In this way, it is possible to use the spreader 10 on liners of different sizes, that obviously maintain the same shape.

The provision of the bearing 51 inside the base 50 allows free rotation of the threaded rod 20, preventing the liner from being damaged by rubbing due to rotation.

Once the composite has consolidated into its final structure, the spreader is returned into its closed configuration by rotating the threaded bar 20 in the opposite direction to the previous one in such a way that it can be extracted through the aforementioned upper hole 6 of the liner, and the cylinder will remain in the pre-established shape.

In the foregoing, the exemplary embodiment refers to a square section cylinder, but as mentioned the spreader according to the invention can be applied to any polygonal section of cylinder, varying the number and angular arrangement of the connecting rods 40, 40' and of the corresponding wings 30.

In the embodiment previously described and illustrated in the drawings, a threaded bar- nuts coupling is used for the actuation of the connecting rods 40, 40'. It is, however, evident that the connecting rods can be actuated in a different manner to achieve the same result, i.e. the progressive opening/closing of the wings 30 with movement parallel to the bar 20. For example, linear sliding rods can be associated with the bar 20, that are capable of translating the pivot pins 41 of the connecting rods 40, 40' in opposite directions.

From what is disclosed, the advantages of the spreader according to the invention, which allows for perfectly maintaining the shape of liners for cylinders with non-circular cross section during the phase of winding of filaments in composite material, are clear.

Naturally, the invention is not limited to the particular embodiment previously described and illustrated in the accompanying drawings, but numerous detailed changes may be made thereto within the reach of the person skilled in the art, without thereby departing from the scope of the appended claims.

## Claims

1. Spreader device (10) specifically designed for manufacturing cylinders having a polygonal cross-section through filament winding technology, wherein a reinforcing fiber of composite material is wound around the outer peripheral surface of a plastic liner (1) having a polygonal cross section, said liner (1) having vertical sides (2) joined by rounded vertices (3), a bottom wall (4), and an upper wall (5) provided with an opening (6), said spreader device comprising a bar (20) axially arranged in said liner (1), connected to a plurality of members (30) which can be brought into contact with the inner surface of the liner to support it and maintain the shape thereof during the filament winding,
**characterized in that** said members (30) are vertically extending wings (30), parallel to the axis of the bar (20) and having a length substantially equal to the length of said vertical sides (2) of the liner, in a number corresponding to said vertices (3), actuated by articulated connecting rods (40, 40') movable in opposite directions along said bar (20) and rotatable in opposite directions, for bringing said wings (30) from a position of closure adjacent to said bar (20) to a position of opening in contact with said vertices (3) of said liner (1).

2. Spreader device (10) according to claim 1, **characterized in that** said wings (30) have a curved cross section adapted to said rounded vertices (3) of the liner (1).

3. Spreader device (10) according to claim 1 or 2, **characterized in that** said bar (20) is a threaded bar having a pair of opposing threads (21, 22) at its ends, engaging respective threaded nuts (23, 24), with corresponding threads, to which said connecting rods (40, 40') are articulated.

4. Spreader device (10) according to claim 3, **characterized in that** it is provided with an upper support (60) for rotating the threaded rod (20) and enabling the opening or closing of the connecting rods (40), (40').

5. Spreader device (10) according to claim 3 or 4, **characterized in that** it provides, at the lower end of the threaded rod (20), a base (50) with an internal bearing (51) for allowing free rotation of the threaded rod (20).

6. Spreader device (10) according to any one of the preceding claims, **characterized in that** it has, in the closed configuration, a transverse dimension smaller than the dimension of said upper opening (6) of the liner (1).

7. Method of using the spreader device (10) according to any one of the preceding claims, for maintaining the shape of the plastic liner (1) of cylinders having a polygonal cross-section during the step of filament winding with composite material, said liner (1) having sides (2) joined by rounded vertices (3), a bottom wall (4), and an upper wall (5) provided with an opening (6), said method comprising the steps consisting of:
- inserting the spreader (10), in a closed configuration, inside the liner (1), through said upper opening (6) until it touches said base (2);
- orientating the spreader (10) in such a way that the wings (30) match with said vertices (3) of the liner;
- actuating in translation in opposite directions the pivot points of the connecting rods (40, 40') articulated to the bar (20) to open said connecting rods, until bringing said wings (30) into contact with said vertices (3) of the liner (1);
- when winding is complete, returning the spreader (10) into its closed configuration, by actuating in translation said pivot points of the connecting rods (40, 40') in the opposite direction to the previous one;
- extracting the spreader (1) through said upper opening (6) of the liner.

8. A method according to claim 7, wherein said actuation in translation of the pivot points of the connecting rods (40, 40') takes place by rotation of said rod (20) that has a pair of opposing threads (21, 22) at its ends, for engaging respective threaded nuts (23, 24), with corresponding threads, to which said connecting rods (40, 40') are articulated.

## Patentansprüche

1. Spreizvorrichtung (10), die speziell für die Herstellung von Zylindern mit polygonalem Querschnitt mittels Filamentwickeltechnik entwickelt wurde, wobei eine Verstärkungsfaser aus Verbundmaterial um die Außenumfangsfläche eines Kunststoffliners (1) mit polygonalem Querschnitt gewickelt wird, wobei der Liner (1) vertikale Seiten (2) aufweist, die durch abgerundete Eckpunkte (3) verbunden sind, eine Bodenwand (4) und eine mit einer Öffnung (6) versehene Oberwand (5) bereitstellt, wobei die Spreizvorrichtung eine axial in der Auskleidung (1) angeordnete Stange (20) umfasst, die mit einer Vielzahl von Elementen (30) verbunden ist, die mit der Innenfläche der Auskleidung in Kontakt gebracht werden können, um diese zu stützen und ihre Form während des Filamentwickelns aufrechtzuerhalten, **dadurch gekennzeichnet, dass** die Elemente (30) vertikal verlaufende Flügel (30) sind, die parallel zur Achse der Stange (20) verlaufen und eine Länge aufweisen, die im Wesentlichen der Länge der vertikalen Seiten (2) der Auskleidung entspricht, in einer Anzahl, die den Eckpunkten (3) entspricht, betätigt durch gelenkige Verbindungsstangen (40, 40'), die in entgegengesetzten Richtungen entlang der Stange (20) beweglich und in entgegengesetzten Richtungen drehbar sind, um die Flügel (30) aus einer Schließposition benachbart zur Stange (20) in eine Öffnung in Berührung mit den Eckpunkten (3) der Auskleidung (1) zu bringen.

2. Spreizvorrichtung (10) nach Anspruch 1, **dadurch gekennzeichnet, dass** die Flügel (30) einen gekrümmten Querschnitt aufweisen, der an die abgerundeten Scheitelpunkte (3) der Auskleidung (1) angepasst ist.

3. Spreizvorrichtung (10) nach Anspruch 1 oder 2, **dadurch gekennzeichnet, dass** die Stange (20) eine Gewindestange aufweist, die ein Paar gegenüberliegender Gewinde (21, 22) an ihren Enden aufweist, die in entsprechende Gewindemuttern (23, 24) mit entsprechenden Gewinden eingreifen, an denen die Verbindungsstangen (40, 40') angelenkt sind.

4. Spreizvorrichtung (10) nach Anspruch 3, **dadurch gekennzeichnet, dass** sie mit einer oberen Halterung (60) bereitgestellt ist, um die Gewindestange (20) zu drehen und die Öffnung oder das Verschließen der Verbindungsstangen (40), (40') zu ermöglichen.

5. Spreizvorrichtung (10) nach Anspruch 3 oder 4, **dadurch gekennzeichnet, dass** sie am unteren Ende der Gewindestange (20) eine Basis (50) mit einem Innenlager (51) bereitstellt, um eine freie Drehung der Gewindestange (20) zu ermöglichen.

6. Spreizvorrichtung (10) nach einem der vorstehenden Ansprüche, **dadurch gekennzeichnet, dass** sie in der geschlossenen Konfiguration eine Querabmessung aufweist, die kleiner ist als die Abmessung der oberen Öffnung (6) der Auskleidung (1).

7. Verfahren zur Verwendung der Spreizvorrichtung (10) nach einem der vorstehenden Ansprüche, um die Form der Kunststoffauskleidung (1) von Zylindern mit polygonalem Querschnitt während des Schritts des Filamentwickelns mit Verbundmaterial aufrechtzuerhalten, wobei die Auskleidung (1) Seiten (2) aufweist, die durch abgerundete Eckpunkte (3) verbunden sind, eine Bodenwand (4) und eine mit einer Öffnung (6) versehene Oberwand (5) bereitstellt, wobei das Verfahren die folgenden Schritte umfasst:
- Einführung der Spreizvorrichtung (10) in geschlossener Konfiguration durch die obere Öffnung (6) in die Auskleidung (1), bis sie die Basis (2) berührt;
- Ausrichtung der Spreizvorrichtung (10) in einer Weise, dass die Flügel (30) mit den genannten Eckpunkten (3) der Auskleidung übereinstimmen;
- Betätigen der Drehpunkte der mit der Stange (20) verbundenen Verbindungsstangen (40, 40') in entgegengesetzte Richtungen, um die Verbindungsstangen zu öffnen, bis die Flügel (30) mit den Ecken (3) der Auskleidung (1) in Berührung kommen;
- Nach Abschluss des Aufwickelns Rückführung der Spreizvorrichtung (10) in ihre geschlossene Konfiguration durch Betätigen der Drehpunkte der Verbindungsstangen (40, 40') in entgegengesetzter Richtung zur vorherigen.
- Extrahieren der Spreizvorrichtung (1) durch die obere Öffnung (6) der Auskleidung.

8. Verfahren nach Anspruch 7, wobei die Betätigung in Translation der Drehpunkte der Verbindungsstangen (40, 40') durch Drehung der Stange (20) erfolgt, die an ihren Enden ein Paar gegenüberliegender Gewinde (21, 22) zum Eingriff in entsprechende Gewindemuttern (23, 24) mit entsprechenden Gewinden in Eingriff zu bringen, an denen die Verbindungsstangen (40, 40') angelenkt sind.

## Revendications

1. Dispositif d'étalement (10) spécialement conçu pour la fabrication de cylindres à section polygonale par la technologie de l'enroulement filamentaire, dans lequel une fibre de renforcement en matériau composite est enroulée autour de la surface périphérique extérieure d'une chemise en plastique (1) à section polygonale, ladite chemise (1) présentant des côtés verticaux (2) reliés par des sommets arrondis (3), une paroi inférieure (4) et une paroi supérieure (5) pourvue d'une ouverture (6), ledit dispositif d'étalement comprenant une barre (20) disposée axialement dans ladite chemise (1), reliée à une pluralité d'éléments (30) qui peut être mis en contact avec la surface intérieure de la chemise pour la soutenir et en maintenir la forme pendant l'enroulement filamentaire,
**caractérisé en ce que** lesdits éléments (30) sont des ailes (30) s'étendant verticalement, parallèlement à l'axe de la barre (20) et ayant une longueur sensiblement égale à la longueur desdits côtés verticaux (2) de la chemise, en nombre correspondant auxdits sommets (3), actionnées par des bielles articulées (40, 40') mobiles dans des directions opposées le long de ladite barre (20) et rotatives dans des direction opposées, pour amener lesdites ailes (30) d'une position de fermeture adjacente à ladite barre (20) à une position d'ouverture en contact avec lesdits sommets (3) de ladite chemise (1).

2. Dispositif d'étalement (10) selon la revendication 1, **caractérisé en ce que** lesdites ailes (30) ont une section transversale incurvée adaptée auxdits sommets arrondis (3) de la chemise (1).

3. Dispositif d'étalement (10) selon la revendication 1 ou 2, **caractérisé en ce que** ladite barre (20) est une barre filetée ayant une paire de filets opposés (21, 22) à ses extrémités, engageant des écrous filetés respectifs (23, 24), avec des filets correspondants, sur lesquels lesdites bielles (40, 40') sont articulées.

4. Dispositif d'étalement (10) selon la revendication 3, **caractérisé en ce qu'**il est muni d'un support supérieur (60) pour faire tourner la tige filetée (20) et permettre l'ouverture ou la fermeture des bielles (40), (40').

5. Dispositif d'étalement (10) selon la revendication 3 ou 4, **caractérisé en ce qu'**il comporte, à l'extrémité inférieure de la tige filetée (20), une base (50) avec un palier interne (51) pour permettre la libre rotation de la tige filetée (20).

6. Dispositif d'étalement (10) selon l'une quelconque des revendications précédentes, **caractérisé en ce qu'**il présente, en configuration fermée, une dimension transversale inférieure à la dimension de ladite ouverture supérieure (6) de la chemise (1).

7. Procédé d'utilisation du dispositif d'étalement (10) selon l'une quelconque des revendications précédentes, pour maintenir la forme de la chemise en plastique (1) de cylindres à section polygonale lors de l'étape d'enroulement filamentaire avec un matériau composite, ladite chemise (1) présentant des côtés (2) reliés par des sommets arrondis (3), une paroi inférieure (4), et une paroi supérieure (5) pourvue d'une ouverture (6), ledit procédé comprenant les étapes consistant à :
- insérer le dispositif d'étalement (10), dans une configuration fermée, à l'intérieur de la chemise (1), à travers ladite ouverture supérieure (6) jusqu'à ce qu'il touche ladite base (2) ;
- orienter le dispositif d'étalement (10) de manière à ce que les ailes (30) coïncident avec lesdits sommets (3) de la chemise ;
- actionner en translation dans des directions opposées les points de pivot des bielles (40, 40') articulées sur la barre (20) pour ouvrir lesdites bielles, jusqu'à amener lesdites ailes (30) en contact avec lesdits sommets (3) de la chemise (1) ;
- lorsque l'enroulement est terminé, ramener le dispositif d'étalement (10) dans sa configuration fermée, en actionnant en translation lesdits points de pivotement des bielles (40, 40') dans la direction opposée à la précédente ;
- extraction du dispositif d'étalement (1) à travers ladite ouverture supérieure (6) de la chemise.

8. Procédé selon la revendication 7, dans lequel l'actionnement en translation des points de pivotement des bielles (40, 40') s'effectue par la rotation de ladite tige (20) qui présente une paire de filets opposés (21, 22) à ses extrémités, pour engager des écrous filetés respectifs (23, 24), avec des filets correspondants, sur lesquels lesdites bielles (40, 40') sont articulées.
